# EUROPEAN PATENT APPLICATION

(11) **EP 4 752 040 A1**
(43) Date of publication of application: **03.06.2026**
(21) Application number: 25210770.1
(22) Date of filing: 23.10.2025
(51) Int. Cl.: B62D 25/08

(54) **VEHICLE FRONT STRUCTURE**

(30) Priority: 28.11.2024 JP 2024207749
(71) Applicant: TOYOTA JIDOSHA KABUSHIKI KAISHA, Toyota-shi, Aichi-ken 471-8571 (JP)
(72) Inventor: MURASHIGE, Norihiro, TOYOTA-SHI, AICHI-KEN, 471-8571 (JP); ITO, Takehiro, TOYOTA-SHI, AICHI-KEN, 471-8571 (JP); NURUKI, Tetsuo, TOYOTA-SHI, AICHI-KEN, 471-8571 (JP)
(74) Representative: Cabinet Beau de Loménie

(57) **Abstract**

A vehicle front structure includes: a front framework portion (12) including right and left front structure portions (14; 22) and right and left suspension tower portions (16), each of the right and left front structure portions (14; 22) being disposed forward of a cabin of a vehicle body and a lower part of the vehicle body, and extending in a vehicle front-rear direction; a cowl portion (32); a left arm portion (20) and a right arm portion (20) extending upward from a front portion of the left front structure portion (14; 22) and a front portion of the right front structure portion (14; 22), respectively; and a frame-shaped reinforcement member (10) coupling upper portions of the right and left arm portions (20), upper portions of the right and left suspension tower portions (16), and the cowl portion (32).

## Description

### 1. Field of the Invention

The present invention relates to a vehicle front structure.

### 2. Description of Related Art

Chinese Patent Application Publication No. 114763182 discloses a vehicle front structure having a part formed by casting. In the structure, right and left suspension tower portions are coupled by an arched cross beam swelling toward a vehicle front side.

### SUMMARY OF THE INVENTION

**In** the structure in which the right and left suspension tower portions are coupled by the arched cross beam as in the structure disclosed in Chinese Patent Application Publication No. 114763182, there is a possibility that a sufficient rigidity cannot be ensured.

The present invention has an object to obtain a vehicle front structure with which a rigidity can be improved in a structure in which at least a part of a vehicle front part is integrally formed by die casting.

A vehicle front structure according to a first aspect of the present disclosure includes a front framework portion integrally provided by casting to include right and left front structure portions and right and left suspension tower portions. The right and left front structure portions are disposed forward of a cabin of a vehicle body and a lower part of the vehicle body, and extend in a vehicle front-rear direction toward a bumper. The vehicle front structure further includes: a cowl portion disposed rearward of the suspension tower portions in the vehicle front-rear direction, the cowl portion extending in a vehicle-width direction; right and left arm portions extending upward respectively from a front portion of the right front structure portion and a front portion of the left front structure portion; and a frame-shaped reinforcement member having a rectangular frame shape, the frame-shaped reinforcement member coupling upper portions of the right and left arm portions, upper portions of right and left suspension tower portions, and the cowl portion.

In the vehicle front structure according to the first aspect of the present disclosure, the front framework portion is integrally provided by casting to include the right and left front structure portions and the right and left suspension tower portions. Further, the cowl portion is disposed rearward of the suspension tower portions in the front framework portion in the vehicle front-rear direction, and the cowl portion extends in the vehicle-width direction. Moreover, the arm portions extend upward from front portions of the respective right and left front structure portions. In addition, the upper portions of the right and left arm portions, the upper portions of the right and left suspension tower portions, and the cowl portion are coupled by the frame-shaped reinforcement member having the rectangular frame shape. As described above, the reinforcement member is formed in a rectangular frame shape to achieve coupling from a front portion of the front structure portion to the cowl portion, resulting in that a Rahmen structure is formed and the rigidity can be improved.

The vehicle front structure according to the first aspect of the present disclosure may further include a coupling member that extends in the vehicle-width direction to couple the right and left suspension tower portions.

In the vehicle front structure according to the first aspect of the present disclosure, the suspension tower portions may be coupled by the coupling member extending in the vehicle-width direction separately from the frame-shaped reinforcement member. In this manner, a load input to one suspension tower portion is effectively transmitted to the other suspension tower portion via the coupling member.

In the vehicle front structure according to the first aspect of the present disclosure, the frame-shaped reinforcement member may be integrally formed, and the coupling member may be a separate member from the frame-shaped reinforcement member and may be fixed to the frame-shaped reinforcement member.

In the vehicle front structure according to the first aspect of the present disclosure, the coupling member may be provided as a separate member from the frame-shaped reinforcement member, and hence it is possible to make an access into a power unit room by removing only the coupling member, resulting in that the serviceability is improved.

In the vehicle front structure according to the first aspect of the present disclosure, the coupling member may be fastened to the suspension tower portion at a position at which the frame-shaped reinforcement member is fastened to the suspension tower portion.

In the vehicle front structure according to the first aspect of the present disclosure, the frame-shaped reinforcement member and the coupling member can be fastened to the suspension tower portion at the same position. Thus, a common fastening tool can be used, and the number of components can be reduced. Further, the number of fastening holes on the suspension tower portion side can be minimized, and the strength of the suspension tower portion can be prevented from being reduced.

In the vehicle front structure according to the first aspect of the present disclosure, the frame-shaped reinforcement member may configure at least a part of an apron upper member configuring a framework of right and left sides of a vehicle upper part.

In the vehicle front structure according to the first aspect of the present disclosure, the frame-shaped reinforcement member functions as at least a part of the apron upper member, and thus it is not required to separately provide the apron upper member.

In the vehicle front structure according to the first aspect of the present disclosure, a part of the frame-shaped reinforcement member fixed to the cowl portion may have a hat shape in section as viewed from the vehicle-width direction, and may configure a closed section with the cowl portion.

In the vehicle front structure according to the first aspect of the present disclosure, the frame-shaped reinforcement member and the cowl portion configure a closed section, and thus the rigidity of the cowl portion can be improved.

In the vehicle front structure according to the first aspect of the present disclosure, the frame-shaped reinforcement member may include a front cross portion that extends in the vehicle-width direction to couple the right and left arm portions, and a rear cross portion that extends in the vehicle-width direction and is fixed to the cowl portion, and a length of the rear cross portion in the vehicle-width direction may be longer than a length of the front cross portion in the vehicle-width direction.

In the vehicle front structure according to the first aspect of the present disclosure, the frame-shaped reinforcement member may include the front cross portion that couples the right and left arm portions and the rear cross portion that is fixed to the cowl portion, and the rear cross portion may be formed to be longer than the front cross portion in the length in the vehicle-width direction. This makes it possible for the frame-shaped reinforcement member to have a substantially trapezoid outer shape in which a vehicle rear side becomes the longer base in plan view, and to increase the size of the frame-shaped reinforcement member as compared with the case in which the front cross portion and the rear cross portion have the same length.

The vehicle front structure according to the first aspect of the present disclosure may further include a brace that couples opposite corners of the frame-shaped reinforcement member to each other.

In the vehicle front structure according to the first aspect of the present disclosure, the brace couples the opposite corners of the frame-shaped reinforcement member to each other, and thus the rigidity can be further improved.

In the vehicle front structure according to the first aspect of the present disclosure, a front portion of the frame-shaped reinforcement member may be connected to a bumper reinforcement.

In the vehicle front structure according to the first aspect of the present disclosure, when the front end of the frame-shaped reinforcement member is connected to the bumper reinforcement, a collision load input to the bumper reinforcement at the time of collision such as head-on collision of the vehicle can be effectively transmitted to the frame-shaped reinforcement member.

In the vehicle front structure according to the first aspect of the present disclosure, the frame-shaped reinforcement member and the coupling member may be made of metal.

In the vehicle front structure according to the first aspect of the present disclosure, the frame-shaped reinforcement member and the coupling member may be made of metal, and hence the flexibility in shape is higher as compared with the configuration of using resin or the like.

As described above, with the vehicle front structure according to the present invention, the rigidity can be improved in the structure in which at least a part of the vehicle front part is integrally formed by die casting.

### BRIEF DESCRIPTION OF THE DRAWINGS

Features, advantages, and technical and industrial significance of exemplary embodiments of the invention will be described below with reference to the accompanying drawings, in which like signs denote like elements, and wherein:
FIG. 1 is a perspective view illustrating main parts of a vehicle to which a vehicle front structure according to an embodiment is applied;
FIG. 2 is a perspective view illustrating main parts of a vehicle to which a vehicle front structure according to a first modification is applied; and
FIG. 3 is a perspective view illustrating main parts of a vehicle to which a vehicle front structure according to a second modification is applied.

### DETAILED DESCRIPTION OF EMBODIMENTS

A vehicle front structure according to an embodiment will be described with reference to the drawings.

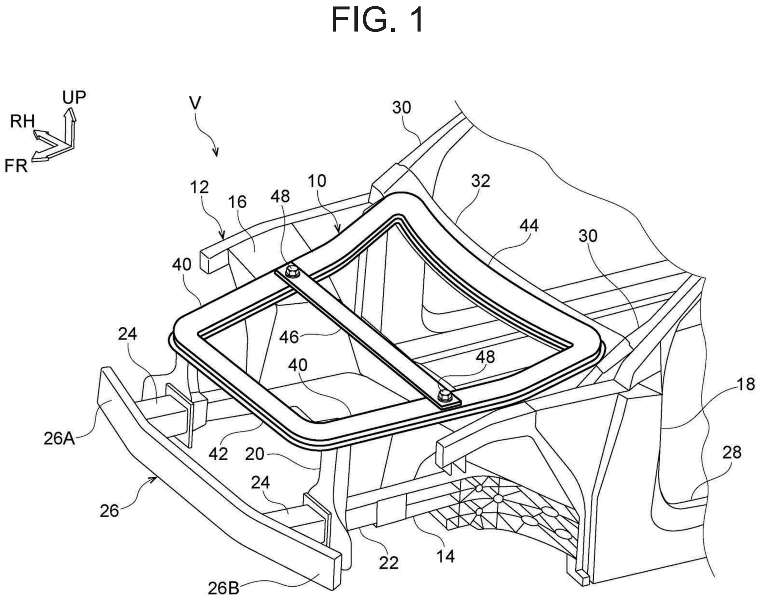

FIG. 1 is a perspective view illustrating main parts of a vehicle V to which a vehicle front structure according to an embodiment is applied. It is to be noted that, in the drawings, an arrow FR, an arrow UP, and an arrow RH indicate a vehicle forward direction, a vehicle upward direction, and a vehicle rightward direction in a vehicle, respectively. Front and rear, up and down, and right and left used in the following description indicate front and rear in a vehicle front-rear direction, up and down in a vehicle-height direction, and right and left in a vehicle right-left direction (vehicle-width direction), respectively, unless otherwise specifically noted.

As illustrated in FIG. 1, the vehicle V includes a frame-shaped reinforcement member 10, and the frame-shaped reinforcement member 10 is mounted to a front framework portion 12 to reinforce the front framework portion 12. The front framework portion 12 is integrally formed by casting, and is disposed at a front part of the vehicle V to configure a framework of the vehicle V. Further, the front framework portion 12 of the present embodiment is made of metal that is mainly composed of aluminum. The front framework portion 12 includes a front side portion 14, a suspension tower portion 16, and a front pillar lower portion 18. Further, in the front framework portion 12, a dash cross portion (not shown) that couples the right and left front side portions 14 is also integrally formed by casting. It is to be noted that the shape to be obtained by integral molding is not particularly limited, and, for example, the front side portion 14 and the front pillar lower portion 18 may be formed by casting separately on the right and left sides.

The front side portion 14 extends to a vehicle front side from a dash portion (not shown) that separates a space inside a vehicle cabin and a space outside the vehicle cabin, and a pair of right and left front side portions 14 is provided. Each of the front side portions 14 extends in the vehicle front-rear direction at a vehicle lower portion, and an arm portion 20 is provided at a front end of the front side portion 14. It is to be noted that, in the present embodiment, a coupling portion 22 formed of a steel sheet is provided between the front side portion 14 and the arm portion 20, and the front structure portion is configured to include the front side portion 14 and the coupling portion 22, but the present disclosure is not limited thereto, and the casted front side portion 14 may extend up to the arm portion 20.

The arm portion 20 extends in the vehicle-height direction, and couples the coupling portion 22 and the frame-shaped reinforcement member 10 in the vehicle-height direction. In other words, the arm portion 20 couples the frame-shaped reinforcement member 10 and the front side portion 14 via the coupling portion 22.

A crash box 24 is provided forward of the arm portion 20 in the vehicle front-rear direction, and a bumper reinforcement 26 is provided at a front end of the crash box 24. The crash box 24 is formed of a steel sheet or the like, and is configured to absorb at least part of collision energy by being crushed when a collision load is input from the vehicle front side.

The bumper reinforcement 26 extends in the vehicle-width direction, and a right end portion 26A of the bumper reinforcement 26 extends up to a position rightward of the right crash box 24 and the right front side portion 14 in the vehicle-width direction. Further, a left end portion 26B of the bumper reinforcement 26 extends to a position leftward of the left crash box 24 and the left front side portion 14 in the vehicle-width direction.

The suspension tower portion 16 is provided outward of each front side portion 14 in the vehicle-width direction and on the vehicle upper side in the vehicle-height direction. The suspension tower portion 16 projects upward of the front side portion 14 in the vehicle-height direction, and a suspension (not shown) is disposed below the suspension tower portion 16.

The suspension tower portion 16 has a rear end connected to the front pillar lower portion 18. The front pillar lower portion 18 extends in the vehicle-height direction. A rocker 28 that is a framework member is connected to a lower end portion of the front pillar lower portion 18. The rocker 28 extends in the vehicle front-rear direction, and a front end portion of the rocker 28 is connected to the front pillar lower portion 18. Further, the rocker 28 has a closed section structure and extends up to a rear portion of the vehicle.

A front pillar upper 30 extending in the vehicle-height direction is provided at an upper end of the front pillar lower portion 18. Further, a cowl portion 32 is provided between the right and left front pillar lower portions 18 on a side rearward of the suspension tower portions 16 in the vehicle front-rear direction. The cowl portion 32 is formed of a steel sheet or the like to extend in the vehicle-width direction, and a front windshield (not shown) is disposed in a part surrounded by the cowl portion 32 and the right and left front pillar uppers 30. It is to be noted that, in the present embodiment, the cowl portion 32 is formed of a steel sheet or the like, but the present disclosure is not limited thereto. The cowl portion 32 may be formed integrally with the front pillar lower portions 18 by casting.

### Frame-shaped Reinforcement Member 10

Next, details of the frame-shaped reinforcement member 10 are described. The frame-shaped reinforcement member 10 of the present embodiment is made of metal in a substantially rectangular frame shape in plan view, and is disposed at an upper portion of the front framework portion 12.

The frame-shaped reinforcement member 10 includes a pair of right and left front-rear extending portions 40, a front cross portion 42 that couples front ends of the front-rear extending portions 40 to each other in the vehicle-width direction, and a rear cross portion 44 that couples rear ends of the front-rear extending portions 40 to each other in the vehicle-width direction.

The front-rear extending portion 40 on the vehicle right side extends diagonally from the cowl portion 32 toward the upper end of the arm portion 20 to an inner side in the vehicle-width direction (to the vehicle left side) as coming toward the vehicle front side. Further, a front end of the front-rear extending portion 40 is inclined as viewed from the vehicle-width direction to be positioned downward of a rear end thereof in the vehicle-height direction, and is fixed to an upper portion of the arm portion 20 on the vehicle right side.

A middle part in the front-rear direction of the front-rear extending portion 40 on the vehicle right side overlaps an upper portion of the suspension tower portion 16 on the vehicle right side, and is fixed to the suspension tower portion 16. Further, a rear end of the front-rear extending portion 40 on the vehicle right side overlaps an upper surface of the cowl portion 32.

The method of fixing the front-rear extending portion 40 to the arm portion 20, the suspension tower portion 16, and the cowl portion 32 is not particularly limited, and the front-rear extending portion 40 may be joined by welding or the like or mechanically fastened by a fastening tool. In the present embodiment, as an example, the front-rear extending portion 40 is fastened to the arm portion 20 by a fastening tool (not shown). This makes it possible to facilitate the removal of the frame-shaped reinforcement member 10 as compared with a structure joined by welding or the like. It is to be noted that, as the fastening tool, a bolt, a nut, a rivet, or the like can be widely used.

The front-rear extending portion 40 on the vehicle left side is disposed to be bilaterally symmetrical with the front-rear extending portion 40 on the vehicle right side. That is, the front-rear extending portion 40 on the vehicle left side extends diagonally from the cowl portion 32 toward the upper end of the arm portion 20 to an inner side in the vehicle-width direction (to the vehicle right side) as coming toward the vehicle front side. Further, a front end of the front-rear extending portion 40 is inclined as viewed from the vehicle-width direction to be positioned downward of a rear end thereof in the vehicle-height direction, and is fixed to an upper portion of the arm portion 20 on the vehicle left side.

A middle part in the front-rear direction of the front-rear extending portion 40 on the vehicle left side overlaps an upper portion of the suspension tower portion 16 on the vehicle left side, and is fixed to the suspension tower portion 16. Further, a rear end of the front-rear extending portion 40 on the vehicle left side overlaps the upper surface of the cowl portion 32.

In this case, each of the right and left front-rear extending portions 40 is formed in a substantially hat shape in section in which the vehicle lower side is opened as viewed from the vehicle front-rear direction. Accordingly, a flange part of the hat shape is fixed to the arm portion 20 and the suspension tower portion 16.

The front cross portion 42 configuring the frame-shaped reinforcement member 10 is formed integrally with the front-rear extending portions 40, and couples the front ends of the right and left front-rear extending portions 40 to each other. In other words, the front cross portion 42 extends in the vehicle-width direction to couple the right and left arm portions 20. It is to be noted that, in the present embodiment, as an example, in plan view, the front-rear extending portion 40 is positioned slightly forward of the arm portion 20 in the vehicle front-rear direction, and is positioned rearward of the bumper reinforcement 26 in the vehicle front-rear direction, but the present disclosure is not limited thereto. For example, the front cross portion 42 may be disposed at the same position as the arm portion 20.

Further, the front cross portion 42 is formed in a substantially hat shape in section in which the vehicle lower side is opened as viewed from the vehicle-width direction.

The rear cross portion 44 configuring the frame-shaped reinforcement member 10 is formed integrally with the front-rear extending portions 40, and couples the rear ends of the right and left front-rear extending portions 40 to each other. Further, the rear cross portion 44 is curved along the shape of the cowl portion 32, and extends in the vehicle-width direction to be fixed to the cowl portion 32. Specifically, the rear cross portion 44 is formed in a substantially hat shape in section in which the vehicle lower side is opened as viewed from the vehicle-width direction, and configures a closed section between the rear cross portion 44 and the cowl portion 32. In addition, a flange part of the hat shape is fastened by a fastening tool (not shown) in a state of overlapping the upper surface of the cowl portion 32.

As described above, the frame-shaped reinforcement member 10 couples the upper portions of the right and left arm portions 20, the upper portions of the right and left suspension tower portions 16, and the cowl portion 32.

Further, the rear cross portion 44 in the frame-shaped reinforcement member 10 is formed to be longer than the front cross portion 42 in a length in the vehicle-width direction, and both end portions of the rear cross portion 44 overlap both end portions of the cowl portion 32. It is to be noted that the width and the depth of the hat shape of the front-rear extending portion 40 of the frame-shaped reinforcement member 10 can be set as appropriate depending on the required strength or fixing positions, and, for example, the front-rear extending portion 40 may be formed to be wide and deep in the vicinity of the suspension tower portion 16 and may be shaped to cover a suspension mounting portion.

Moreover, each of the right and left front-rear extending portions 40 in the frame-shaped reinforcement member 10 extends from the upper end of the front pillar lower portion 18 to the vehicle front side to be coupled to the front side portion 14, and hence functions as a part of what is called an apron upper member configuring a framework on a vehicle upper lateral side.

### Coupling Member 46

A coupling member 46 is provided to the frame-shaped reinforcement member 10. The coupling member 46 is made of metal separately from the frame-shaped reinforcement member 10, and extends in the vehicle-width direction to couple the right and left suspension tower portions 16.

A first end portion of the coupling member 46 overlaps the front-rear extending portion 40 of the frame-shaped reinforcement member 10 at a position of the right suspension tower portion 16, and is fastened together with the front-rear extending portion 40 by a bolt 48 serving as a fastening tool.

A second end portion of the coupling member 46 overlaps the front-rear extending portion 40 of the frame-shaped reinforcement member 10 at a position of the left suspension tower portion 16, and is fastened together with the front-rear extending portion 40 by a bolt 48 serving as a fastening tool. As described above, the frame-shaped reinforcement member 10 and the coupling member 46 are fastened to the suspension tower portion 16 at the same position.

### Actions

Next, actions of the vehicle front structure according to the present embodiment will be described.

As illustrated in FIG. 1, in the vehicle front structure according to the present embodiment, the front framework portion 12 is integrally formed by casting to include the right and left front side portions 14 and the right and left suspension tower portions 16. In this manner, when the front framework portion 12 is molded by casting, it is possible to effectively reinforce the upper portion of the vehicle front part that has a possibility of lack of strength due to restrictions in manufacture such as fluidity. Further, the cowl portion 32 is disposed rearward of the suspension tower portions 16 in the vehicle front-rear direction in the front framework portion 12, and the cowl portion 32 extends in the vehicle-width direction. Moreover, the arm portions 20 extend upward from front portions of the respective right and left front side portions 14. In addition, the upper portions of the right and left arm portions 20, the upper portions of the right and left suspension tower portions 16, and the cowl portion 32 are coupled by the frame-shaped reinforcement member 10 having a rectangular frame shape. As described above, the reinforcement member is formed in a rectangular frame shape to achieve coupling from the front portion of the front side portion 14 to the cowl portion 32, resulting in that a Rahmen structure is formed and the rigidity can be improved.

Further, in the present embodiment, the suspension tower portions 16 are coupled by the coupling member 46 extending in the vehicle-width direction separately from the frame-shaped reinforcement member 10. In this manner, a load input to one suspension tower portion 16 is effectively transmitted to the other suspension tower portion 16 via the coupling member 46.

In particular, in the present embodiment, the coupling member 46 is provided as a separate member from the frame-shaped reinforcement member 10, and hence it is possible to make an access into a power unit room by removing only the coupling member 46, resulting in that the serviceability is improved.

Moreover, in the present embodiment, the frame-shaped reinforcement member 10 and the coupling member 46 can be fastened to the suspension tower portion 16 at the same position. Thus, a common bolt 48 (fastening tool) can be used, and the number of components can be reduced. Further, the number of fastening holes on the suspension tower portion 16 side can be minimized, and the strength of the suspension tower portion 16 can be prevented from being reduced.

Still further, in the present embodiment, the frame-shaped reinforcement member 10 functions as at least a part of the apron upper member, and thus it is not required to separately provide the apron upper member. Further, at the time of head-on collision of the vehicle V, the collision load can be transmitted in a dispersed manner to the front side portion 14 and the front-rear extending portion 40 functioning as the apron upper member.

Further, in the present embodiment, the rear cross portion 44 of the frame-shaped reinforcement member 10 and the cowl portion 32 configure a closed section, and hence the rigidity of the cowl portion 32 can be improved.

Moreover, the rear cross portion 44 is formed to be longer than the front cross portion 42 configuring the frame-shaped reinforcement member 10 in a length in the vehicle-width direction. This makes it possible for the frame-shaped reinforcement member 10 to have a substantially trapezoid outer shape in which a vehicle rear side becomes the longer base in plan view, and to increase the size of the frame-shaped reinforcement member 10 as compared with a case in which the front cross portion 42 and the rear cross portion 44 have the same length.

Still further, in the present embodiment, the frame-shaped reinforcement member 10 and the coupling member 46 are made of metal, and hence the flexibility in shape is higher as compared with a configuration of using resin or the like.

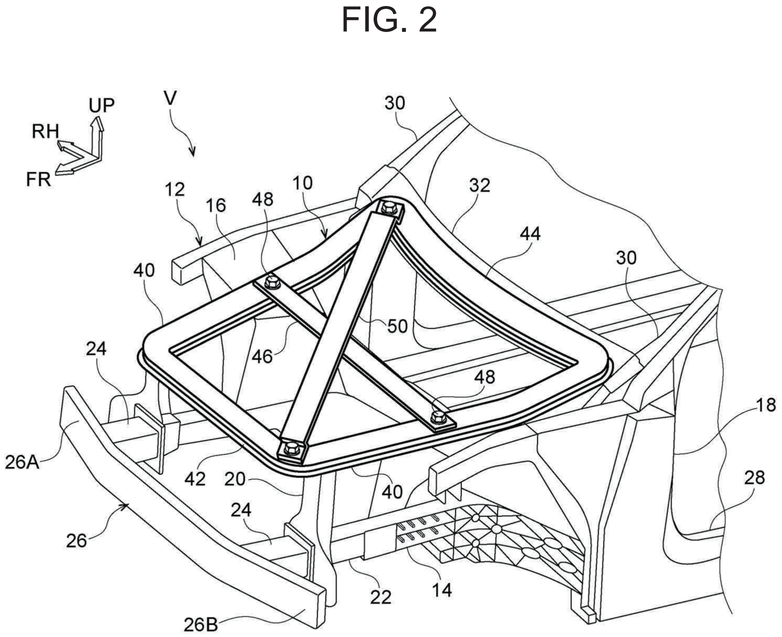

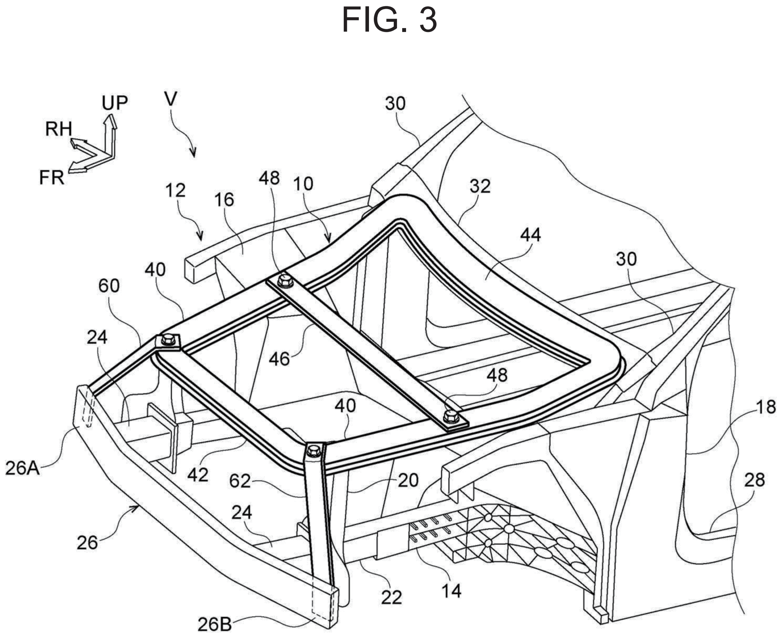

It is to be noted that the present embodiment provides a configuration in which the right and left front-rear extending portions 40 are connected by the coupling member 46, but, as in a first modification illustrated in FIG. 2, a structure in which a brace is added may be adopted. Further, as in a second modification illustrated in FIG. 3, a structure in which the bumper reinforcement 26 and the frame-shaped reinforcement member 10 are directly connected may be adopted.

### First Modification

FIG. 2 is a perspective view illustrating main parts of a vehicle to which a vehicle front structure according to the first modification is applied. As illustrated in FIG. 2, in this modification, a brace 50 coupling opposite corners of the frame-shaped reinforcement member 10 is included.

The brace 50 is formed, for example, in an elongated plate shape by using a steel sheet or the like similarly to the coupling member 46, and a first end portion of the brace 50 is fastened to a connecting part between the front cross portion 42 and the left front-rear extending portion 40.

Further, a second end portion of the brace 50 is fastened to a connecting part between the rear cross portion 44 and the right front-rear extending portion 40. It is to be noted that, at the first end portion of the brace 50, the frame-shaped reinforcement member 10 and the brace 50 may be fastened together to the arm portion 20. Similarly, at the second end portion of the brace 50, the frame-shaped reinforcement member 10 and the brace 50 may be fastened together to the cowl portion 32.

With this modification, the brace 50 couples the opposite corners of the frame-shaped reinforcement member 10 to each other, and thus the rigidity of the vehicle front part can be further improved.

It is to be noted that, in this modification, a front portion left corner and a rear portion right corner of the frame-shaped reinforcement member 10 are connected by the brace 50, but the present disclosure is not limited thereto. A front portion right corner and a rear portion left corner of the frame-shaped reinforcement member 10 may be connected by the brace 50. Further, two braces 50 may be disposed to intersect with each other.

### Second Modification

FIG. 3 is a perspective view illustrating main parts of a vehicle to which a vehicle front structure according to the second modification is applied. As illustrated in FIG. 3, in this modification, the front end of the frame-shaped reinforcement member 10 is connected to the bumper reinforcement 26 via an inclined member 60 and an inclined member 62.

The inclined member 60 is disposed on the right side of the vehicle V, and is formed in an elongated plate shape by using a steel sheet or the like. Further, a first end portion of the inclined member 60 is fastened to a connection part between the right front-rear extending portion 40 and the front cross portion 42 in the frame-shaped reinforcement member 10, and a second end portion of the inclined member 60 is fastened to a rear surface of the right end portion 26A of the bumper reinforcement 26. Accordingly, the inclined member 60 is inclined to be positioned on the vehicle lower side as coming toward the vehicle front side, as viewed from the vehicle-width direction.

The inclined member 62 is disposed on the left side of the vehicle V, and is formed in an elongated plate shape by using a steel sheet or the like. Further, a first end portion of the inclined member 62 is fastened to a connection part between the left front-rear extending portion 40 and the front cross portion 42 in the frame-shaped reinforcement member 10, and a second end portion of the inclined member 62 is fastened to a rear surface of the left end portion 26B of the bumper reinforcement 26. Accordingly, the inclined member 62 is inclined to be positioned on the vehicle lower side as coming toward the vehicle front side, as viewed from the vehicle-width direction.

With this modification, when the front end of the frame-shaped reinforcement member 10 is connected to the bumper reinforcement 26 via the inclined member 60 and the inclined member 62, a collision load input to the bumper reinforcement 26 at the time of collision such as head-on collision of the vehicle V can be effectively transmitted to the frame-shaped reinforcement member 10.

In particular, as in this modification, a fastening position between the bumper reinforcement 26 and each of the inclined member 60 and the inclined member 62 is located outward of the front side portion 14 and the crash box 24 in the vehicle-width direction, and hence, even when a colliding object collides at a position outward of the front side portion 14 in the vehicle-width direction as in small overlap collision, the collision load can be effectively transmitted to the frame-shaped reinforcement member 10.

Although the vehicle front structure according to the present invention has been described above, it is needless to say that the present invention can be carried out in various aspects without departing from the gist of the present invention. For example, as illustrated in FIG. 1, in the present embodiment, the rear cross portion 44 is formed to be longer than the front cross portion 42, but the present disclosure is not limited thereto, and the front cross portion 42 and the rear cross portion 44 may have lengths equivalent to each other. In this case, both end portions of the rear cross portion 44 are disposed inward of both end portions of the cowl portion 32 in the vehicle-width direction, and hence the length of the front-rear extending portion 40 from the suspension tower portion 16 to the rear end can be reduced, and the front-rear extending portion 40 can be prevented from buckling.

Further, in the above-mentioned embodiment, a structure in which the coupling member 46 is attached to the frame-shaped reinforcement member 10 is employed, but the present disclosure is not limited thereto, and a structure including no coupling member 46 may be employed. Moreover, the brace 50 described in FIG. 2 may be provided instead, without providing the coupling member 46.

Still further, in the above-mentioned embodiment, the frame-shaped reinforcement member 10 is formed in a substantially hat shape in section, but the present disclosure is not limited thereto, and the shape may be changed as appropriate. For example, the frame-shaped reinforcement member may be formed with the use of a member having a substantially flat plate shape. Further, the frame-shaped reinforcement member may be formed with the use of a member having a substantially rectangular tube shape. In this case, the front cross portion, the rear cross portion, and the front-rear extending portion configuring the frame-shaped reinforcement member may be formed of separate members and connected to each other. Moreover, a part of the frame-shaped reinforcement member 10 may be formed of an energy absorbing member such as a crash box.

Regarding the above-mentioned embodiment, the following supplements will be disclosed.

### Supplement 1

A vehicle front structure, including:
a front framework portion integrally provided by casting to include right and left front structure portions and right and left suspension tower portions, each of the right and left front structure portions being disposed forward of a cabin of a vehicle body and a lower part of the vehicle body, and extending in a vehicle front-rear direction toward a bumper;
a cowl portion disposed rearward of the suspension tower portions in the vehicle front-rear direction, the cowl portion extending in a vehicle-width direction;
right and left arm portions, the left arm portion and the right arm portion extending upward from a front portion of the left front structure portion and a front portion of the right front structure portion, respectively; and
a frame-shaped reinforcement member having a rectangular frame shape, the frame-shaped reinforcement member coupling upper portions of the right and left arm portions, upper portions of the right and left suspension tower portions, and the cowl portion.

### Supplement 2

The vehicle front structure according to Supplement 1, further including a coupling member that extends in the vehicle-width direction to couple the right and left suspension tower portions.

### Supplement 3

The vehicle front structure according to Supplement 2, in which:
the frame-shaped reinforcement member is integrally formed; and
the coupling member is a separate member from the frame-shaped reinforcement member, and is fixed to the frame-shaped reinforcement member.

### Supplement 4

The vehicle front structure according to Supplement 2, in which the coupling member is fastened to the suspension tower portion at a position at which the frame-shaped reinforcement member is fastened to the suspension tower portion.

### Supplement 5

The vehicle front structure according to any one of Supplements 1 to 4, in which the frame-shaped reinforcement member configures at least a part of an apron upper member configuring a framework of right and left sides of a vehicle upper part.

### Supplement 6

The vehicle front structure according to any one of Supplements 1 to 5, in which:
a part of the frame-shaped reinforcement member fixed to the cowl portion has a hat shape in section as viewed from the vehicle-width direction; and
the frame-shaped reinforcement member configures a closed section with the cowl portion.

### Supplement 7

The vehicle front structure according to any one of Supplements 1 to 6, in which:
the frame-shaped reinforcement member includes a front cross portion that extends in the vehicle-width direction to couple the right and left arm portions, and a rear cross portion that extends in the vehicle-width direction and is fixed to the cowl portion; and
a length of the rear cross portion in the vehicle-width direction is longer than a length of the front cross portion in the vehicle-width direction.

### Supplement 8

The vehicle front structure according to any one of Supplements 1 to 7, further including a brace that couples opposite corners of the frame-shaped reinforcement member to each other.

### Supplement 9

The vehicle front structure according to any one of Supplements 1 to 8, in which a front portion of the frame-shaped reinforcement member is connected to a bumper reinforcement.

### Supplement 10

The vehicle front structure according to Supplement 2, in which the frame-shaped reinforcement member and the coupling member are made of metal.

## Claims

1. A vehicle front structure, comprising:
a front framework portion (12) integrally provided by casting to include right and left front structure portions (14; 22) and right and left suspension tower portions (16), each of the right and left front structure portions (14; 22) being configured to be disposed forward of a cabin of a vehicle body and a lower part of the vehicle body, and extending in a vehicle front-rear direction toward a bumper;
a cowl portion (32) disposed rearward of the suspension tower portions (16) in the vehicle front-rear direction, the cowl portion (32) extending in a vehicle-width direction;
right and left arm portions (20), the left arm portion (20) and the right arm portion (20) extending upward from a front portion of the left front structure portion (14; 22) and a front portion of the right front structure portion (14; 22), respectively; and
a frame-shaped reinforcement member (10) having a rectangular frame shape, the frame-shaped reinforcement member (10) coupling upper portions of the right and left arm portions (20), upper portions of the right and left suspension tower portions (16), and the cowl portion (32).

2. The vehicle front structure according to claim 1, further comprising a coupling member (46) that extends in the vehicle-width direction to couple the right and left suspension tower portions (16).

3. The vehicle front structure according to claim 2, wherein:
the frame-shaped reinforcement member (10) is integrally formed; and
the coupling member (46) is a separate member from the frame-shaped reinforcement member (10), and is fixed to the frame-shaped reinforcement member (10).

4. The vehicle front structure according to claim 2, wherein the coupling member (46) is fastened to the suspension tower portion (16) at a position at which the frame-shaped reinforcement member (10) is fastened to the suspension tower portion (16).

5. The vehicle front structure according to claim 1, wherein the frame-shaped reinforcement member (10) configures at least a part of an apron upper member configuring a framework of right and left sides of a vehicle upper part.

6. The vehicle front structure according to claim 1, wherein:
a part of the frame-shaped reinforcement member (10) fixed to the cowl portion (32) has a hat shape in section as viewed from the vehicle-width direction; and
the frame-shaped reinforcement member (10) configures a closed section with the cowl portion (32).

7. The vehicle front structure according to claim 1, wherein:
the frame-shaped reinforcement member (10) includes a front cross portion (42) that extends in the vehicle-width direction to couple the right and left arm portions (20), and a rear cross portion (44) that extends in the vehicle-width direction and is fixed to the cowl portion (32); and
a length of the rear cross portion (44) in the vehicle-width direction is longer than a length of the front cross portion (42) in the vehicle-width direction.

8. The vehicle front structure according to claim 1, further comprising a brace (50) that couples opposite corners of the frame-shaped reinforcement member (10) to each other.

9. The vehicle front structure according to claim 1, wherein a front portion of the frame-shaped reinforcement member (10) is connected to a bumper reinforcement (26).

10. The vehicle front structure according to claim 2, wherein the frame-shaped reinforcement member (10) and the coupling member (46) are made of metal.
